# EUROPÄISCHE PATENTSCHRIFT

(11) **EP 3 291 385 B1**
(45) Veröffentlichungstag und Bekanntmachung des Hinweises auf die Patenterteilung: **22.05.2019**
(21) Anmeldenummer: 17187387.0
(22) Anmeldetag: 23.08.2017
(51) Int. Cl.: H01R 43/052

(54) **ANORDNUNG ZUM KONFEKTIONIEREN VON KABELN**
ASSEMBLY FOR MAKING CABLES
SYSTÈME DE CONFECTION DE CÂBLES

(30) Priorität: 02.09.2016 EP 16187059
(43) Veröffentlichungstag der Anmeldung: 07.03.2018
(73) Patentinhaber: KOMAX HOLDING AG, 6036 Dierikon (CH)
(72) Erfinder: FUCHS, Beat, 6030 Ebikon (CH)
(74) Vertreter: Inventio AG

(56) Entgegenhaltungen:
- JP-A- 2014 116 120

## Beschreibung

Die Erfindung betrifft eine Anordnung zum Konfektionieren von Kabeln gemäss dem Oberbegriff von Anspruch 1. Bei der Konfektionierung von Kabeln werden Kabelenden von Kabeln gecrimpt oder auf andere Weise bearbeitet. Dank einer Anordnung, die mehrere parallel nebeneinander angeordnete Kabelbearbeitungseinrichtungen vorzugsweise gleichen Typs umfasst, können mit diesen Kabelbearbeitungseinrichtungen zeitgleich mehrere konfektionierte Kabel gefertigt werden. Parallel bedeutet dabei, dass die Maschinenlängsachsen der Kabelbearbeitungseinrichtungen im Wesentlichen parallel zueinander verlaufen.

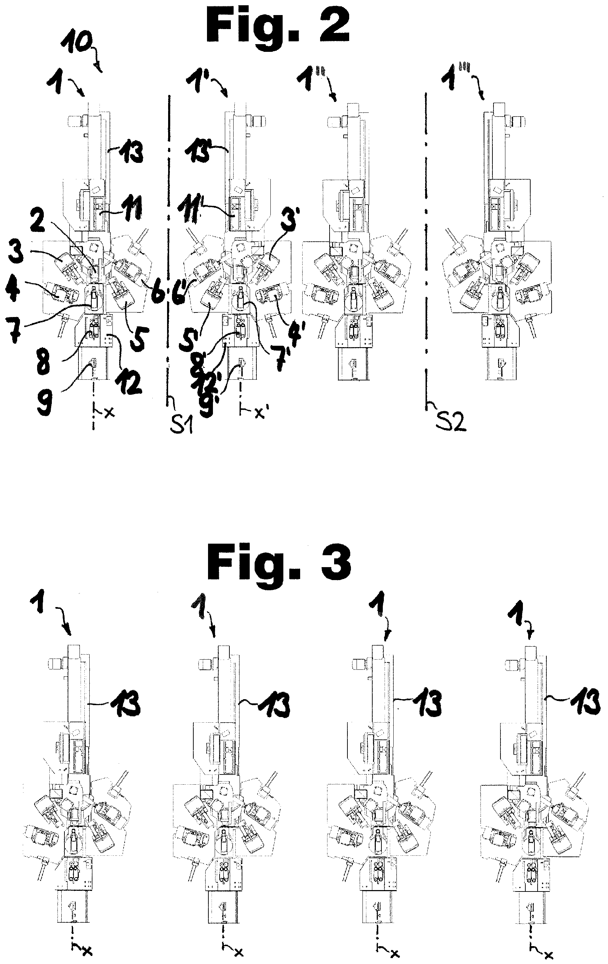

Anordnungen zum Konfektionieren von Kabeln mit parallel nebeneinander angeordneten Kabelbearbeitungseinrichtungen sind seit langer Zeit bekannt und gebräuchlich. Beispielhaft ist eine solche Anordnung in Fig. 3 wiedergegeben. Die Anordnung umfasst vier identisch ausgeführte, parallel nebeneinander angeordnete und jeweils einer Maschinenlängsachse x sich erstreckende Kabelbearbeitungseinrichtungen 1. Die Fertigung der konfektionierten Kabel erfolgt meist losweise, d.h. vom gleichen Artikel, der beispielsweise aus einem Kabel mit beidseitig gecrimpten Kontakten besteht, wird eine Gesamtmenge produziert, die in Losen in einer Kabelabnahme in Form einer Ablagewanne 13 abgelegt werden. Der Maschinenbediener ist während der Produktion des Artikels unter anderem damit beschäftigt, die Lose mit den fertig konfektionierten Kabeln aus der Kabelabnahme 13 zu entnehmen und für die Weiterverarbeitung vorzubereiten (z.B. in eine Kiste legen oder bündeln) und die Kabelbearbeitungseinrichtung zu überwachen. Nach dem Entnehmen eines Loses muss dies in der Regel an der Kabelbearbeitungseinrichtung 1 quittiert werden, damit die Produktion des nächsten Loses beginnen kann. Wenn ein Bediener mehrere (beispielsweise hier eben vier) Kabelbearbeitungseinrichtungen 1 betreut, muss der Bediener lange Wege zurücklegen. So muss er um die Kabelbearbeitungseinrichtung 1 herumgehen, um zur nächsten Kabelbearbeitungseinrichtung 1 zu gelangen. Auf der Kabeleinzugsseite der Kabelbearbeitungseinrichtungen 1 können Kabelgebinde (wie Fässer oder Rollen) für mehrere Kabel deponiert sein, was den vom Bediener zurückzulegenden Weg zusätzlich verlängert.

Aus der JP 2014 116120 A ist eine Anordnung zum Konfektionieren von Kabeln mit einer Mehrzahl von parallel nebeneimander angeordneten Kabelbearbeitungseinrichtungen bekannt geworden, bei welcher jede der Kabelbearbeitungseinrichtungen zur beidseitigen Bedienung ausgelegt sind und welche hierzu unter anderem jeweils über zwei Bedieneinheiten mit Zustimmungstasten zum Auslösen eines Verarbeintungsprozesses und ober zwei Aufnahmewannen verfügen, wobei die Bedieneinheiten und Aufnahmewannen in Bezug auf die Maschinenlangsachse beidseitig an der Kabelbearbeitungseinrichtung angeodnet sind.

Es ist deshalb eine Aufgabe der vorliegenden Erfindung, die Nachteile des Bekannten zu vermeiden und insbesondere eine Anordnung zum Konfektionieren von Kabeln zu schaffen, die mit welcher konfektionierte Kabel effizienter gefertigt werden können.

Erfindungsgemäss wird diese Aufgabe mit einer Anordnung mit den Merkmalen des Anspruchs 1 gelöst. Die Anordnung zum Konfektionieren von Kabeln weist parallel nebeneinander angeordneten Kabelbearbeitungseinrichtungen auf. Die jeweilige Kabelbearbeitungseinrichtung dieser Kabelbearbeitungseinrichtungen umfasst dabei folgende Komponenten: wenigstens eine Bearbeitungsstation, eine Kabelfördereinrichtung und eine zentrale Bedieneinheit. Als zum Bearbeiten von Kabelenden eines Kabels eingesetzte Bearbeitungsstationen kommen beispielsweise Abisolierstationen, Tüllenstationen und Crimpstationen in Frage. Die entlang einer Maschinenlängsachse verlaufende Kabelfördereinrichtung dient zum Transportieren des Kabels in Richtung der Maschinenlängsachse zur wenigstens einen Bearbeitungsstation. Über die zentrale Bedieneinheit sind wenigstens in Bezug auf den Produktionsbetrieb die Bearbeitungsstationen ansteuerbar und kontrollierbar. Eine zentrale Bedieneinheit kann über Eingabemittel in Form von Tasten, Knöpfen, Schaltern, Computermaus und über Anzeigemittel, beispielsweise optische, akustische oder haptische Anzeigemittel, zum Anzeigen von Betriebszuständen verfügen. Das Anzeigemittel kann zum Beispiel ein Computermonitor oder Bildschirm sein, der dem Bedienpersonal hilft, schnell Informationen zu den Betriebszuständen zu erhalten. Denkbar wären auch berührungssensitive Anzeigeflächen (sog. "Touchscreens"), die zugleich eine Eingabe ermöglichen. Die zentrale Bedieneinheit ist bezüglich der Maschinenlängsachse seitlich an der Kabelbearbeitungseinrichtung angeordnet. Dadurch, dass die parallel nebeneinander angeordneten Kabelbearbeitungseinrichtungen wenigstens eine Gruppe mit zwei benachbarten Kabelbearbeitungseinrichtungen aufweist, wobei die zentralen Bedieneinheiten der zwei benachbarten und eine Gruppe bildenden Kabelbearbeitungseinrichtungen derart positioniert sind, dass sie von einem gemeinsamen zwischen den zwei benachbarten und eine Gruppe bildenden Kabelbearbeitungseinrichtungen liegenden begehbaren Bereich bedienbar sind, können konfektionierte Kabel effizienter massenweise gefertigt werden.

Ein Aspekt der Erfindung betrifft eine Anordnung gemäss obiger Beschreibung, bei welcher die zentralen Bedieneinheiten der zwei benachbarten und eine Gruppe bildenden Kabelbearbeitungseinrichtungen einander zugewandt angeordnet und gegebenfalls einander gegenüberliegend angeordnet sind. Zwischen den erwähnten zwei benachbarten und eine Gruppe bildenden Kabelbearbeitungseinrichtungen liegt ein begehbarer Bereich. Die zentralen Bedieneinheiten der erwähnten beiden Kabelbearbeitungseinrichtungen können von diesem gemeinsamen begehbaren Bereich bedient werden; dank der erfindungsgemässen Anordnung kann der Bediener zwei Kabelbearbeitungseinrichtungen - ohne Zurücklegen einer zeitraubenden Umgehungswegstrecke - einfach bedienen. Der Bediener muss sich praktisch nur um seine eigene Achse drehen um zwischen den Bedieneinheiten zu wechseln. Die Anordnung zeichnet sich somit durch eine insgesamt verbesserte Handhabung und Ergonomie aus.

Mit einer lokalen, von der zentralen Bedieneinheit örtlich separierten Kabeltransport-Bedieneinheit kann die Kabelfördereinrichtung für bestimmte Arbeitsschritte angesteuert werden. Beispielsweise wenn erstmalig ein Kabel der Kabelfördereinrichtung zugeführt werden soll oder wenn ein Kabelwechsel notwendig ist, kann eine derartige Kabeltransport-Bedieneinheit vorteilhaft sein. Bei einem Kabelwechsel wird das neue Kabel vorzugsweise zunächst durch eine Richtstation und danach zur beispielsweise als Bandförderer ausgeführte Kabelfördereinrichtung geführt. Zum Durchführen des Kabels durch den Bandförderer kann der Bediener mittels einer Taste oder einem anderen Eingabemittel den Bandförderer aktivieren. Wenn die Kabelbearbeitungseinrichtungen über solche Kabeltransport-Bedieneinheiten verfügen, die vorzugsweise jeweils im Bereich der Kabelfördereinrichtung liegen und bezüglich der Maschinenlängsachse seitlich an der Kabelbearbeitungseinrichtung angeordnet sind, sind die Kabeltransport-Bedieneinheiten der zwei benachbarten und eine Gruppe bildenden Kabelbearbeitungseinrichtungen einander zugewandt und vorzugsweise einander gegenüberliegend angeordnet. Dabei ist je Kabelbearbeitungseinrichtung die Kabeltransport-Bedieneinheit in Bezug auf die Maschinenlängsachse jeweils einseitig angeordnet. Für die Anordnung verfügen die Kabelbearbeitungseinrichtungen mit anderen Worten über (in Bezug auf die Maschinenlängsachse) einseitig angeordnete Kabeltransport-Bedieneinheitein. Die jeweilige Kabelbearbeitungseinrichtung mit der einseitig angeordneten die Kabeltransport-Bedieneinheit weist folglich nur eine die Kabeltransport-Bedieneinheit auf, wobei die die Kabeltransport-Bedieneinheit bezüglich der Maschinenlängsachse seitlich an der Kabelbearbeitungseinrichtung angeordnet ist.

Wenn die Kabelbearbeitungseinrichtungen weiter über in Bezug auf die Maschinenlängsachse einseitig angeordnete Ablagewannen zur Aufnahme von bearbeiteten Kabeln verfügen, die jeweils bezüglich der Maschinenlängsachse seitlich an der Kabelbearbeitungseinrichtung angeordnet sind, sind die Ablagewannen der zwei benachbarten und eine Gruppe bildenden Kabelbearbeitungseinrichtungen ebenfalls einander zugewandt und vorzugsweise einander gegenüberliegend angeordnet. Die jeweilige Kabelbearbeitungseinrichtung mit der einseitig angeordneten Ablagewanne weist folglich nur eine Ablagewanne auf, wobei die Ablagewanne bezüglich der Maschinenlängsachse seitlich an der Kabelbearbeitungseinrichtung angeordnet ist.

Besonders vorteilhaft ist es, wenn die zwei benachbarten und eine Gruppe bildenden Kabelbearbeitungseinrichtungen im Wesentlichen spiegelsymmetrisch ausgeführt sind. Durch die - wenigstens in Bezug auf die vorerwähnten Bedieneinheiten (zentrale Bedieneinheiten, Transport-Bedieneinheiten), gegebenenfalls Ablagewannen - spiegelbildliche Anordnung der die zwei benachbarten und eine Gruppe bildenden Kabelbearbeitungseinrichtungen stehen die zu bedienenden oder für den Bediener sonstwie erreichbaren Maschinenkomponenten wie zentrale Bedieneinheiten, Kabeltransport-Bedieneinheiten und Ablagewannen auf vorteilhafte Weise einander gegenüber.

Wenn die Anordnung eine Vielzahl von Kabelbearbeitungseinrichtungen umfasst, ist es vorteilhaft, die Kabelbearbeitungseinrichtungen paarweise zu gruppieren und die jeweiligen zu einem Paar zusammengefassten Kabelbearbeitungseinrichtungen spiegelsymmetrisch auszuführen.

Weitere Vorteile und Einzelmerkmale ergeben sich aus der nachfolgenden Beschreibung eines Ausführungsbeispiels und aus den Zeichnungen. Es zeigen:
- Figur 1: eine perspektivische Darstellung einer erfindungsgemässen Anordnung mit zwei Kabelbearbeitungseinrichtungen,
- Figur 2: eine Draufsicht auf eine erfindungsgemässen Anordnung mit vier Kabelbearbeitungseinrichtungen, und
- Figur 3: eine Draufsicht auf eine Anordnung mit vier Kabelbearbeitungseinrichtungen gemäss dem Stand der Technik.

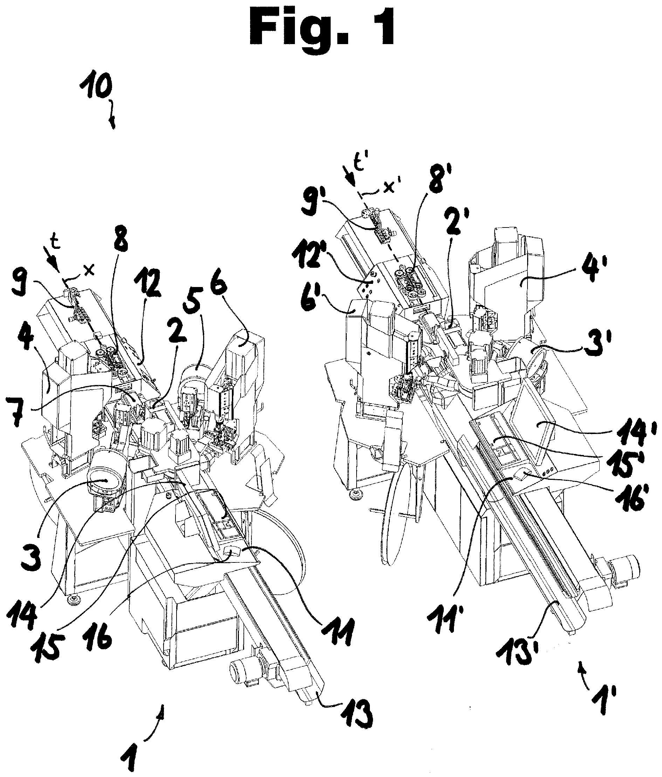

Figur 1 zeigt eine Anordnung 10 zum Konfektionieren von (nicht dargestellten) Kabeln mit zwei parallel nebeneinander angeordneten Kabelbearbeitungseinrichtungen 1 und 1'. Die beiden Kabelbearbeitungseinrichtungen 1 und 1' sind bis auf die nachfolgend im Detail erläuterte unterschiedliche Orientierung gleichartig ausgestaltet.

Die beiden Kabelbearbeitungseinrichtungen 1 und 1' weisen die gleichen Komponenten auf. Die jeweilige Kabelbearbeitungseinrichtung 1, 1' umfasst eine Zuführeinheit mit einem als Bandförderer ausgestalteten Kabelfördereinrichtung 8, 8', welche das jeweilige Kabel entlang der Maschinenlängsachse x, x' in durch die Pfeile t, t' angedeutete Transportrichtung zur Schwenkeinheit 7, 7' bringt. Vor der Kabelfördereinrichtung 8, 8' ist eine Richtstation 9, 9' angeordnet. Die um eine vertikale Achse drehbare Schwenkeinheit 7, 7' verfügt über einen Greifer zum Halten des Kabels. Eine Abisolierstation 2, 2' zum Ablängen und Abisolieren des Kabels ist ersichtlicherweise auf der jeweiligen Maschinenlängsachse x angeordnet. Die Bearbeitungsstationen 3, 3'; 5, 5' und 4, 4'; 6, 6' sind hingegen neben der Maschinenlängsachse angeordnet. Bei den mit 3, 3'; 5, 5' bezeichneten Bearbeitungsstationen handelt es sich um Tüllenstationen und bei den mit 4, 4'; 6, 6' bezeichneten Bearbeitungsstationen handelt es sich um Crimpstationen. Eine Crimpstation kann dabei eine Crimppresse zum Verbinden eines Kabelendes mit einem Crimpkontakt aufweisen. Die Bearbeitungsstationen 3, 3' und 4, 4' sind dem vorauseilenden Kabelende zugeordnet; die Bearbeitungsstationen 5, 5' und 6, 6' dienen zur Konfektionierung der nacheilenden Kabelenden. Hinsichtlich des Aufbaus und der Wirkungsweise einer Kabelfördereinrichtung mit Crimppressen wird beispielhaft auf die EP 1 341 269 A1 verwiesen. Zusätzlich oder alternativ wären als Bearbeitungsstationen auch Bestückungsstationen zum Bestücken von Kabelenden mit Steckergehäusen vorstellbar. Jede Kabelbearbeitungseinrichtung 1, 1' weist weiter eine Ablagewanne 13, 13' zur Aufnahme von bearbeiteten Kabeln auf.

Der jeweilige Produktionsbetrieb in den Kabelbearbeitungseinrichtungen 1, 1' wird jeweils über eine zentrale Bedieneinheit 11, 11' kontrolliert und überwacht. Die zentrale Bedieneinheit 11, 11' ist mit einer Steuerung verbunden, über die die einzelnen Bearbeitungsstationen für den Betrieb der Kabelbearbeitungseinrichtung 1, 1' zur massenweisen Fertigung von konfektionierten Kabeln ansteuerbar sind. Die zentrale Bedieneinheit 11, 11' gemäss Ausführungsbeispiel von Fig. 1 umfasst beispielhaft einen Bildschirm 14, 14', eine Computertastatur 15 und eine zugehörige Maus 16, 16'. Auf dem Bildschirm 14, 14' die für die Produktion relevanten Daten wie Stückzähler, Qualitätsdaten und Fehlermeldungen angezeigt werden. Die Dateneingaben und das Auslösen von Befehlen zur Maschinensteuerung können mittels Tastatur und Maus vorgenommen werden. Selbstverständlich wäre es auch denkbar, den Bildschirm als Touchscreen auszuführen, wodurch Eingaben direkt über den Bildschirm vorgenommen werden können. Zusätzlich sind an der zentrale Bedieneinheit 11, 11' Tasten oder andere Eingabemittel vorhanden, mit denen Funktionen wie das Starten und Stoppen der Kabelbearbeitungseinrichtung 1, 1' oder das Quittieren von Fertigungslosen direkt auslösbar sind. Jeder Kabelbearbeitungseinrichtung 1, 1' ist zudem eine Kabeltransport-Bedieneinheit 12, 12' zugeordnet, welche jeweils im Bereich der Kabelfördereinrichtung 8, 8' angeordnet ist. Ersichtlicherweise weist jede Kabelbearbeitungseinrichtung 1, 1' dabei in Bezug auf die Maschinenlängsachse x einseitig angeordnete bzw. nur seitlich angeordnete Kabeltransport-Bedieneinheiten 12, 12' auf. Mit der Kabeltransport-Bedieneinheit 12, 12' kann die Kabelfördereinrichtung zum Beispiel zum erstmaligen Einführen eines Kabels und für einen Kabelwechsel angesteuert werden. Beispielsweise wenn erstmalig ein Kabel der Kabelfördereinrichtung 8, 8'zugeführt werden soll oder wenn ein Kabelwechsel notwendig ist, kann eine derartige Kabeltransport-Bedieneinheit vorteilhaft sein. Zum Ein- und Durchführen des Kabels durch den Bandförderer kann der Bediener mittels einer Taste oder einem anderen Eingabemittel den Bandförderer der jeweiligen Kabelfördereinrichtung 8, 8'aktivieren.

Die mit 1' bezeichnete Kabelbearbeitungseinrichtung ist spiegelbildlich zur Kabelbearbeitungseinrichtung 1 ausgestaltet. Diese spezielle Anordnung führt dazu, dass unter anderem die beiden zentralen Bedieneinheit 11 und 11' und die beiden Kabeltransport-Bedieneinheiten 12 und 12' einander gegenüberliegend und einander zugewandt angeordnet sind. Damit wird ermöglicht, dass der Bediener die zentralen Bedieneinheiten 11, 11', und Kabeltransport-Bedieneinheiten 12, 12' von zwei Kabelbearbeitungseinrichtungen 1, 1' in etwa von demselben Ort bzw. von einem gemeinsamen begehbaren Bereich, der sich zwischen den Kabelbearbeitungseinrichtungen 1, 1' befindet, bedienen kann. Insbesondere muss der Bediener keine der Kabelbearbeitungseinrichtungen umgehen, um von einer zur anderen Kabelbearbeitungseinrichtung zu gelangen. Dasselbe gilt auch für die weiteren Komponenten der Kabelbearbeitungseinrichtungen wie etwa für die beiden Ablagewannen 13, 13'. Wie die Kabeltransport-Bedieneinheiten 12, 12' sind ersichtlicherweise auch die Ablagewannen 13, 13' jeweils in Bezug auf die Maschinenlängsachse x einseitig an den Kabelbearbeitungseinrichtungen 1, 1' angeordnet. Dank der einander gegenüberliegenden und zugewandten Anordnung der Ablagewannen 13, 13' kann zusätzliche Wegstrecke für den Bediener eingespart werden, was sich positiv auf die gesamthafte Effizienz der Anordnung mit den zwei Kabelbearbeitungseinrichtungen 1, 1' auswirkt. Der Bediener muss sich praktisch nur um seine eigene Achse drehen um zwischen den einzelnen Bedieneinheiten 11 und 11' sowie 12 und 12' zu wechseln.

Eine vorteilhafte Anordnung könnte sich auch dann ergeben, wenn zum Beispiel die zentralen Bedieneinheiten 11 und 11' der zwei benachbarten und eine Gruppe bildenden Kabelbearbeitungseinrichtungen 1, 1' nicht - wie in Fig. 1 dargestellt - direkt einander gegenüberliegend angeordnet sind, sondern zueinander bezüglich der Maschinelängsachsen x, x' versetzt angeordnet wären. Bei der erwähnten (nicht dargestellten) alternativen Anordnung wären die Bedieneinheiten 11 und 11' der Kabelbearbeitungseinrichtungen 1, 1' derart positioniert sind, dass sie von einem gemeinsamen zwischen den Kabelbearbeitungseinrichtungen 1, 1' liegenden begehbaren Bereich bedienbar sind.

Figur 2 zeigt eine Draufsicht auf eine erfindungsgemässe Anordnung 10 mit vier Kabelbearbeitungseinrichtungen 1, 1', 1", 1"' mit zwei je eine Gruppe bildenden Kabelbearbeitungseinrichtungen in der Art von Fig. 1. Jede der Kabelbearbeitungseinrichtungen 1, 1', 1", 1"' ist jeweils gleichartig aufgebaut und aus denselben Komponenten zusammengesetzt. Die vier Kabelbearbeitungseinrichtungen 1, 1', 1" ,1"' sind paarweise gruppiert. Die beiden Kabelbearbeitungseinrichtungen 1 und 1' bilden eine erste Gruppe und die Kabelbearbeitungseinrichtungen 1" und 1"' eine zweite Gruppe. Die zwei Gruppen sind dabei gleich ausgestaltet. Die die erste Gruppe bildenden Kabelbearbeitungseinrichtungen 1 und 1' sind zueinander im Wesentlichen spiegelsymmetrisch ausgeführt; die die zweite Gruppe bildenden Kabelbearbeitungseinrichtungen 1" und 1"' sind ebenso zueinander im Wesentlichen spiegelsymmetrisch ausgeführt. Die jeweiligen Symmetrieebenen sind mit S1 (für die erste Gruppe mit den Kabelbearbeitungseinrichtungen 1 und 1') und mit S2 (für die zweite Gruppe mit den Kabelbearbeitungseinrichtungen 1" und 1"') bezeichnet. Im Vergleich zur konventionellen Anordnung, die in Fig. 3 dargestellt ist, ist als weiterer Vorteil der erfindungsgemässen Anordnung erkennbar, dass die Anordnung sich durch einen geringeren Platzbedarf auszeichnet. Die Querabmessung (quer zur Längsrichtung x) der Anordnung 10 (Fig. 2) ist deutlich kleiner als die Querabmessung der konventionellen Anordnung (Fig. 3), da die Kabelbearbeitungseinrichtungen näher zusammengestellt werden können. Dank der spiegelsymmetrischen Ausführung und der der sich daraus ergebenden Bedienbarkeit jeweils zweier Kabelbearbeitungseinrichtungen 1 und 1' einerseits und 1" und 1"' andererseits, können die Kabelbearbeitungseinrichtungen 1' und 1" - wie aus Fig. 2 gut ersichtlich ist - mit sehr geringem Abstand aneinandergestellt werden. Der Bereich zwischen den Kabelbearbeitungseinrichtungen 1' und 1", d.h. der Bereich zwischen den Gruppen der Kabelbearbeitungseinrichtungen 1, 1'; 1", 1"' muss nicht in Bezug auf die Längsrichtung vorgegeben durch die Maschinenlängsachsen x, x' durchgehend begehbar sein.

Die in Fig. 2 gezeigte Anordnung 10 mit den vier Kabelbearbeitungseinrichtungen 1,1', 1", 1"' stellt lediglich ein Beispiel zur Erläuterung des Erfindungsgedankens dar. Selbstverständlich liesse sich die Anordnung je nach Bedarf durch Zufügen von weiteren Zweiergruppen von Kabelbearbeitungseinrichtungen in analoger Weise erweitern.

## Patentansprüche

1. Anordnung zum Konfektionieren von Kabeln mit parallel nebeneinander angeordneten Kabelbearbeitungseinrichtungen (1), wobei die Kabelbearbeitungseinrichtungen (1) jeweils folgende Komponenten umfassen:
- wenigstens eine Bearbeitungsstation (2, 3, 4, 5, 6) zum Bearbeiten von Kabelenden eines Kabels,
- eine entlang einer Maschinenlängsachse (x) verlaufende Kabelfördereinrichtung (8) zum Transportieren des Kabels in Richtung der Maschinenlängsachse (x) zur wenigstens einen Bearbeitungsstation (2, 3, 4, 5, 6), und
- eine zentrale Bedieneinheit (11) zum Bedienen der Kabelbearbeitungseinrichtung (1), die bezüglich der Maschinenlängsachse (x) seitlich an der Kabelbearbeitungseinrichtung (1) angeordnet ist,
wobei die parallel nebeneinander angeordneten Kabelbearbeitungseinrichtungen (1) wenigstens eine Gruppe mit zwei benachbarten Kabelbearbeitungseinrichtungen (1, 1'; 1", 1"') aufweist und wobei die zentralen Bedieneinheiten (11, 11') der zwei benachbarten und eine Gruppe bildenden Kabelbearbeitungseinrichtungen (1, 1'; 1", 1"') derart positioniert sind, dass die erwähnten zentralen Bedieneinheiten (11, 11') von einem gemeinsamen zwischen den zwei benachbarten und eine Gruppe bildenden Kabelbearbeitungseinrichtungen (1, 1'; 1", 1"') liegenden begehbaren Bereich bedienbar sind, **dadurch gekennzeichnet, dass**
die Kabelbearbeitungseinrichtungen (1, 1'; 1", 1"') über jeweils in Bezug auf die Maschinenlängsachse (x) einseitig angeordnete Kabeltransport-Bedieneinheiten (12, 12') und/oder über jeweils in Bezug auf die Maschinenlängsachse (x) einseitig angeordnete Ablagewannen (13, 13') zur Aufnahme von bearbeiteten Kabeln verfügen, wobei die Kabeltransport-Bedieneinheiten (12, 12') bzw. die Ablagewannen (13, 13') der zwei benachbarten und eine Gruppe bildenden Kabelbearbeitungseinrichtungen (1, 1'; 1", 1"') einander zugewandt angeordnet sind.

2. Anordnung nach Anspruch 1, **dadurch gekennzeichnet, dass** die zentralen Bedieneinheiten (11, 11') der zwei benachbarten und eine Gruppe bildenden Kabelbearbeitungseinrichtungen (1, 1'; 1", 1"') einander zugewandt angeordnet sind.

3. Anordnung nach Anspruch 1 oder 2, **dadurch gekennzeichnet, dass** die zwei benachbarten und eine Gruppe bildenden Kabelbearbeitungseinrichtungen (1, 1'; 1", 1"') zueinander im Wesentlichen spiegelsymmetrisch ausgeführt sind.

## Claims

1. An arrangement for the fabrication of cables with cable processing devices (1) arranged in parallel alongside one another, wherein the cable processing devices (1) each comprise the following components:
- at least one processing station (2, 3, 4, 5, 6) for processing cable ends of a cable,
- a cable processing device (8) running along a machine longitudinal axis (x) for transporting the cable in the direction of the machine longitudinal axis (x) to the at least one processing station (2, 3, 4, 5, 6) and
- a central control unit (11) for operating the cable processing device (1) which is arranged laterally on the cable processing device (1) relative to the machine longitudinal axis (x),
wherein the cable processing devices (1) arranged in parallel alongside one another exhibit at least one group with two adjacent cable processing devices (1, 1', 1", 1"') and wherein the central operating units (11, 11') of the two adjacent cable processing devices (1, 1', 1", 1"') which form a group are positioned in such a manner that the aforementioned central operating units (11, 11') can be operated from a joint accessible region lying between the two adjacent cable processing devices (1, 1', 1", 1"') which form a group,
**characterized in that**
the cable processing devices (1, 1', 1", 1"') each have cable transport operating units (12, 12') arranged on one side relative to the machine longitudinal axis (x) and/or delivery trays (13, 13') arranged on one side relative to the machine longitudinal axis (x) for receiving processed cables, wherein the cable transport operating units (12, 12') or else the delivery trays (13, 13') of the two adjacent cable processing devices (1, 1', 1", 1"') which form a group are arranged facing one another.

2. The arrangement according to claim 1, **characterized in that** the central control units (11, 11') of the two adjacent cable processing units (1, 1', 1", 1"') which form a group are arranged facing one another.

3. The arrangement according to claim 1 or 2, **characterized in that** the two adjacent cable processing units (1, 1', 1", 1"') which form a group are configured substantially mirror-symmetrically to one another.

## Revendications

1. Système de confection de câbles comportant des dispositifs d'usinage de câbles disposés parallèlement l'un à l'autre (1), les dispositifs d'usinage de câbles (1) comprenant respectivement les composants suivants :
- au moins une station d'usinage (2, 3, 4, 5, 6) pour l'usinage des extrémités de câble d'un câble,
- un dispositif de transport de câbles (8) s'étendant le long d'un axe longitudinal de machine (x) pour le transport du câble en direction de l'axe longitudinal de machine (x) vers au moins une station d'usinage (2, 3, 4, 5, 6), et
- une unité de manoeuvre centrale (11) servant à manoeuvrer le dispositif d'usinage de câbles (1) et qui est disposée latéralement par rapport à l'axe longitudinal de machine (x) au niveau du dispositif d'usinage de câbles (1),
les dispositifs d'usinage de câbles disposés parallèlement l'un à l'autre (1) présentant au moins un groupe comportant deux dispositifs d'usinage de câbles voisins (1, 1', 1", 1"') et les unités de manoeuvre centrales (11, 11') des deux dispositifs d'usinage de câbles (1, 1', 1", 1"') disposés parallèlement l'un à l'autre et formant un groupe étant positionnées de manière à ce que les unités de manoeuvre centrales mentionnées (11, 11') soient manoeuvrables depuis une zone commune accessible à pied se trouvant entre les deux dispositifs d'usinage de câbles (1, 1', 1", 1"') disposés parallèlement l'un à l'autre et formant un groupe, **caractérisé en ce que**
les dispositifs d'usinage de câbles (1, 1', 1", 1"') disposent respectivement d'unités de manoeuvre de transport de câble (12, 12') disposées respectivement unilatéralement par rapport à l'axe longitudinal de machine (x) et/ou de bacs de dépôt (13, 13') disposés respectivement unilatéralement par rapport à l'axe longitudinal de machine (x) et destinés à recevoir des câbles usinés, les unités de manoeuvre de transport de câble (12, 12') ou les bacs de dépôt (13, 13') des deux dispositifs d'usinage de câbles (1, 1', 1", 1"') disposés parallèlement l'un à l'autre et formant un groupe étant disposés tournés les uns vers les autres.

2. Dispositif selon la revendication 1, **caractérisé en ce que** les unités de manoeuvre centrales (11, 11') des deux dispositifs d'usinage de câbles (1, 1', 1", 1"') disposés parallèlement l'un à l'autre et formant un groupe sont disposées tournées les unes vers les autres.

3. Dispositif selon la revendication 1 ou 2, **caractérisé en ce que** les deux dispositifs d'usinage de câbles (1, 1', 1", 1"') disposés parallèlement l'un à l'autre et formant un groupe sont réalisés sensiblement en symétrie miroir l'un par rapport à l'autre.
